# EUROPÄISCHE PATENTANMELDUNG

(11) **EP 2 182 258 A1**
(43) Veröffentlichungstag der Anmeldung: **05.05.2010**
(21) Anmeldenummer: 09003144.4
(22) Anmeldetag: 05.03.2009
(51) Int. Cl.: F16K 1/36

(54) **Ventiloberteil**

(30) Priorität: 03.11.2008 DE 202008014555 U
(71) Anmelder: Flühs Drehtechnik GmbH, D-58515 Lüdenscheid (DE)
(72) Erfinder: Thurau, Friedrich, 58849 Herscheid (DE)
(74) Vertreter: Kötter, Ulrich

(57) **Zusammenfassung**

Die Erfindung betrifft ein Ventiloberteil mit einem Kopfstück, das von einer Spindel mittig durchsetzt ist, über die ein Ventilkörper betätigbar ist, das mit dem Ventilsitz eines Gehäuses zur Anlage kommt, wobei zwischen Ventilkörper und Ventilsitz eine Dichtvorrichtung angeordnet ist, welche einen Dichtring umfasst, der an einer Scheibe anliegt, welche einen Durchbruch aufweist, mit dem sie auf einer im Wesentlichen zylindrisch ausgebildeten Aufnahme des Ventilkörpers angeordnet ist, **dadurch gekennzeichnet, dass** der Durchbruch (41) derart ausgebildet ist, dass zwischen der Aufnahme (35) des Ventilkörpers (3) und der Scheibe (4) wenigstens eine Durchlassöffnung gebildet ist.

## Beschreibung

Die Erfindung betrifft ein Ventiloberteil mit einem Kopfstück, das von einer Spindel mittig durchsetzt ist, über die ein Ventil betätigbar ist, das mit dem Ventilsitz eines Gehäuses zur Anlage kommt, wobei zwischen Ventil und Ventilsitz eine Dichtvorrichtung angeordnet ist, welche einen Dichtring umfasst, der an einer Scheibe anliegt, welche einen Durchbruch aufweist, mit dem sie auf einer im Wesentlichen zylindrisch ausgebildeten Aufnahme des Ventils angeordnet ist.

Ein derartiges Ventiloberteil ist aus der GB 2 137 736 A bekannt. Das Ventiloberteil dient der Steuerung des Austritts von Medien aus Armaturen. Zu diesem Zweck wird das Ventiloberteil mittels seines Kopfstücks in das Gehäuse einer Armatur geschraubt; auf seine Spindel wird ein Drehgriff oder Hebel befestigt. Zur Steuerung des Durchflusses ist ein Ventilstempel vorgesehen, der über die Spindel innerhalb des Kopfstücks linear bewegbar ist. Zur Abdichtung gegen den Ventilsitz nimmt der Ventilstempel eine Scheibe auf, die über eine Mutter oder einen angeformten Pilzkopf an dem Ventilstempel befestigt ist und die mit einer Bohrung versehen ist, welche eine Hinterspülung der Scheibe ermöglicht, wodurch die Scheibe sowie ein diese umgebender Dichtring gegen den Ventilsitz gepresst wird.

Nachteilig an dem vorbekannten Ventiloberteil ist, dass die Herstellung der Scheibe sowie ihre Montage sehr aufwendig ist. Das Einbringen der für die Hinterspülung erforderlichen Bohrung erfordert einen zusätzlichen Arbeitsschritt, welcher im Zuge der Massenfertigung derartiger Ventiloberteile den Prozessablauf beeinträchtigt.

Hier will die Erfindung Abhilfe schaffen. Der Erfindung liegt die Aufgabe zugrunde, ein Ventiloberteil der vorgenannten Art zu schaffen, bei der die Herstellung und Montage der Scheibe vereinfacht ist. Gemäß der Erfindung wird diese Aufgabe dadurch gelöst, dass der Durchbruch derart ausgebildet ist, dass zwischen der Aufnahme des Ventilkörpers und der Scheibe wenigstens eine Durchlassöffnung gebildet ist.

Mit der Erfindung ist ein Ventiloberteil geschaffen, bei dem die Herstellung und Montage der Scheibe vereinfacht ist. Durch die Modifizierung des Durchbruchs der Scheibe, derart, dass in montiertem Zustand zwischen der Aufnahme des Ventilkörpers und der Scheibe wenigstens eine Durchlassöffnung gebildet ist, ist das Vorsehen einer zusätzlichen Bohrung nicht mehr erforderlich.

In Weiterbildung der Erfindung ist die Scheibe als Kegelstumpf ausgebildet. Hierdurch ist die Angriffsfläche des hinterspülenden Wassers auf den Dichtring vergrößert, wodurch eine bessere Dichtwirkung erzielt ist.

In Ausgestaltung der Erfindung weist die Aufnahme des Ventils eine zentrische Bohrung auf und die Scheibe ist mittels Bördeln der durch die Bohrung gebildeten umlaufenden Kante an dem Ventil befestigt. Hierdurch ist eine einfache und zuverlässige Befestigung der Scheibe erzielt, wobei gleichzeitig eine Überdeckung der wenigstens einen Durchlassöffnung durch die Befestigung vermieden ist.

In weiterer Ausgestaltung der Erfindung ist der Durchbruch durch eine Bohrung gebildet, in deren Umfang wenigstens eine Kerbe eingebracht ist. Eine derartige Modifizierung der Bohrung ist in einem Fertigungsschritt durchführbar; die wenigstens eine Kerbe ermöglicht einen ausreichenden Wasserdurchtritt entlang der Aufnahme des Ventils.

Bevorzugt sind vier Kerben jeweils um 90° zueinander versetzt angeordnet. Hierdurch ist bei einem Bördelwerkzeug mit dreieckigem Querschnitt, dass heißt mit 120° zueinander versetzten Kanten gewährleistet, dass wenigstens drei der eingebrachten Kerben durch den Bördelvorgang nicht verdeckt werden.

In weiterer Ausgestaltung der Erfindung ist an der Scheibe an ihrer dem Kopfstück zugewandten Seite ein Abstandhalter angeformt. Hierdurch ist ein Anlegen der Scheibe an den Ventilkörper im Zuge der Befestigung vermieden, welches eine Hinterspülung der Scheibe entgegenstände. Der Absatz ermöglicht eine durchgängige Hinterspülung der Scheibe.

In Weiterbildung der Erfindung ist an der Scheibe an ihrer dem Kopfstück abgewandten Seite ein Abstandhalter angeformt. Hierdurch ist eine Befestigung der Scheibe über ein Befestigungselement ermöglicht, ohne dass die Hinterspülung der Scheibe beeinträchtigt wird.

Bevorzugt weist die Aufnahme des Ventilkörpers ein Außengewinde auf, und die Scheibe ist mittels einer Mutter an dem Ventilkörper befestigt. Hierdurch ist eine lösbare Befestigung der Scheibe an dem Ventilkörper bewirkt.

Vorteilhaft ist der Abstandhalter als Absatz ausgebildet, der den Durchbruch umgibt. Hierdurch ist ein gleichmäßiger Abstand der Scheibe zum Ventilkörper gewährleistet. Bevorzugt ist der Absatz quadratisch ausgebildet, wobei die Kantenlänge des Quadrats im Wesentlichen dem Durchmesser der Aufnahme des Ventilkörpers entspricht.

In weiterer Ausgestaltung der Erfindung ist der Absatz derart angeordnet, dass dessen Ecken neben der wenigstens einen Durchlassöffnung angeordnet sind. Hierdurch ist gewährleistet, dass die Durchlassöffnungen nicht durch den Ventilkörper versperrt werden können.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:

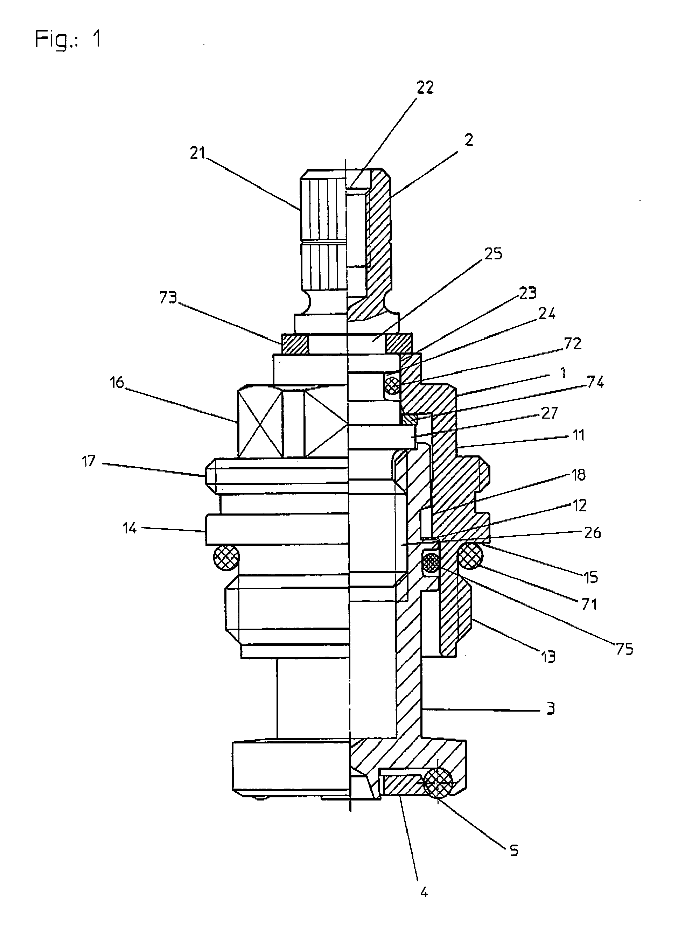

- Fig. 1: die Darstellung eines Ventiloberteils teilweise in Ansicht, teilweise im Axialschnitt;

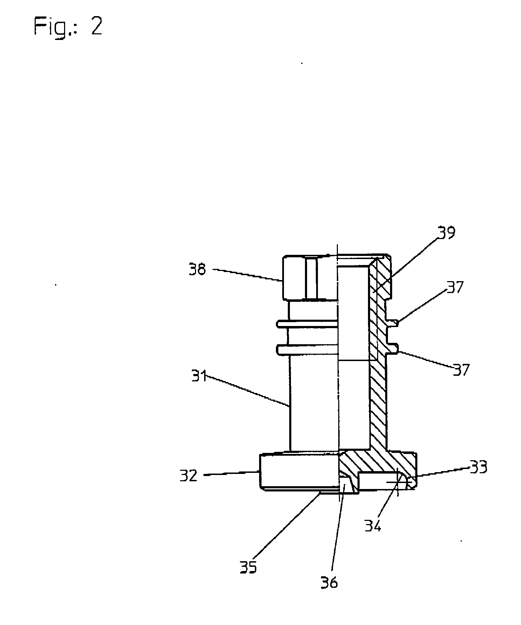

- Fig. 2: die Darstellung des Ventilkörpers des Ventiloberteils aus Figur 1 teilweise in Ansicht, teilweise im Axialschnitt;

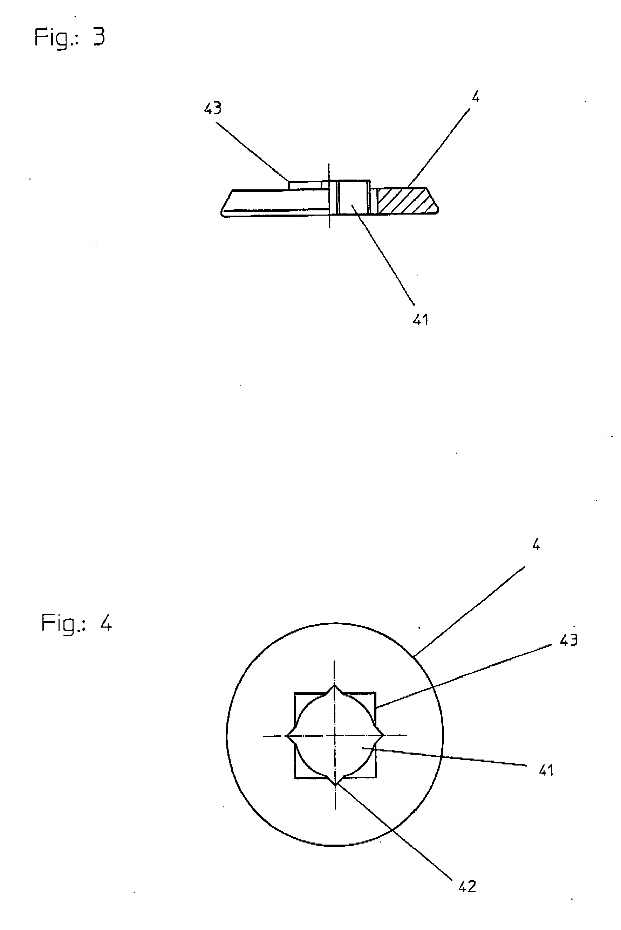

- Fig. 3: die Darstellung der Scheibe des Ventiloberteils aus Figur 1 teilweise in Ansicht, teilweise im Axialschnitt;
- Fig. 4: die Darstellung der Scheibe aus Figur 3 in der Draufsicht;
- Fig. 5: die Darstellung des Ventilkörpers aus Figur 2 mit montierter Scheibe und Dichtring mit angedeutetem Ventilsitz;
- Fig. 6: die Detailansicht der Anlage von Scheibe und Dichtring am Ventilsitz gemäß Figur 5;
- Fig. 7: die Darstellung eines Ventiloberteils in einer weiteren Ausführungsform teilweise in Ansicht, teilweise im Axialschnitt;

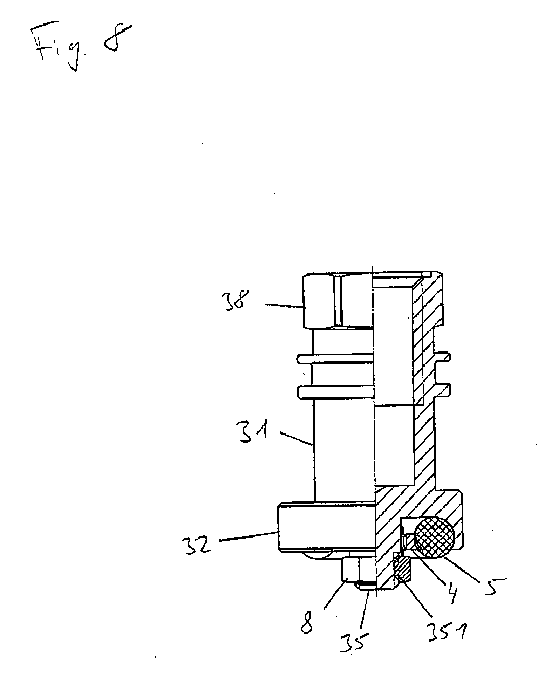

- Fig. 8: die Darstellung des Ventilkörpers des Ventiloberteils aus Figur 7 mit Schreibverbindung teilweise in Ansicht, teilweise im Axialschnitt;

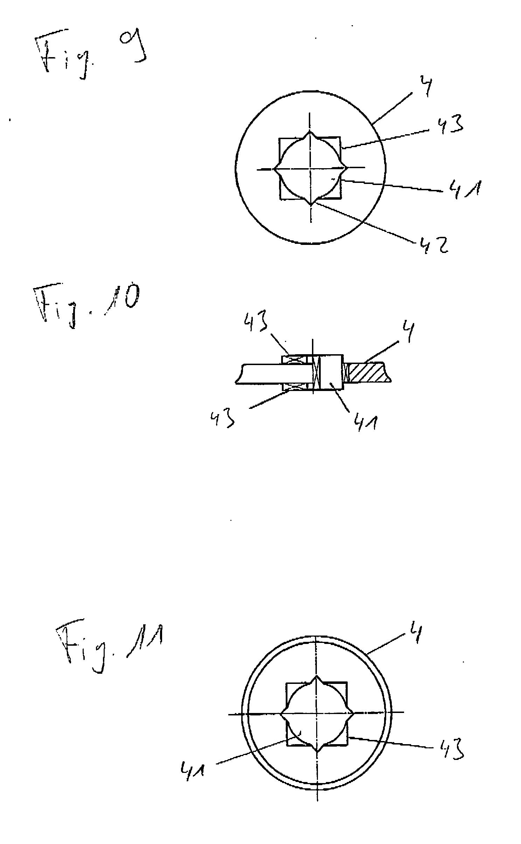

- Fig. 9: die Darstellung der Scheibe des Ventiloberteils aus Figur 7 in der Draufsicht;
- Fig. 10: die Darstellung der Scheibe aus Figur 9 teilweise in Ansicht, teilweise im Axialschnitt und
- Fig. 11: die Darstellung der Scheibe aus Figur 9 in der Ansicht von unten.

Das als Ausführungsbeispiel gewählte Ventiloberteil weist ein Kopfstück 1 auf, das von einer in dieser radial geführten Spindel 2 mittig durchsetzt ist. Über die Spindel 2 ist ein Ventilkörper 3 betätigbar, der mit dem Ventilsitz 61 des Gehäuses 6 zur Anlage kommt. Der Ventilkörper 3 ist gebildet durch einen im wesentlichen zylindrischen Stempel, der eine Kegelscheibe 4 aufnimmt, die von einem Dichtring 5 umgeben ist, wobei Kegelscheibe 4 und Dichtring 5 mit dem Ventilsitz 61 des Gehäuses 6 zur Anlage kommen.

Das Kopfstück 1 besteht aus einem symmetrischen Hohlkörper, dessen beide Stirnflächen offen sind. Auf seiner dem Gehäuse 6 zugewandten Seite weist das Kopfstück einen hülsenartigen Teil 11 auf. An dem Teil 11 ist innen umlaufend ein Anschlag 12 zur Anlage des Ventilkörpers 3 angeformt. An seinem dem Gehäuse 6 zugewandten Ende ist das Kopfstück 1 außen mit einem Anschlussgewinde 13 versehen. Mit Hilfe des Anschlussgewindes 13 ist das Kopfstück 1 in das Gehäuse 6 der Armatur schraubbar.

Nach dem Einschrauben liegt ein Einschraubbund 14 des Kopfstücks 1 auf dem Gehäuse 6 der Armatur auf. Der Einschraubbund 14 weist auf seiner dem Anschlussgewinde 13 zugewandten Seite eine Ringnut 15 zur Aufnahme des O-Rings 71 auf. Das Einschrauben in die Armatur erfolgt mittels eines Außenmehrkants 16, der auf der dem Anschlussgewinde 13 abgewandten Seite des Einschraubbundes 14 vorgesehen ist. Dieser Teil des Kopfstücks 1 kann außen - wie dargestellt - mit einem zusätzlichen Gewinde 17 für die Aufnahme einer - nicht dargestellten - Hülse versehen sein. In Höhe des Einschraubbundes 14 und des Gewindes 17 ist der hülsenartige Teil 11 des Kopfstücks 1 innen mit einem Innensechskant 18 versehen.

Die Spindel 2 ist im Wesentlichen massiv ausgeführt. Sie ist an ihrer dem Kopfstück 1 abgewandten Seite außen als Außenvielkant 21 ausgeführt und innen mit einem Sackloch 22 mit Innengewinde für die Befestigung eines - nicht dargestellten - Drehgriffs versehen. Anschließend ist außen an der Spindel 2 eine Zylinderfläche 23 vorgesehen, mit der die Spindel 2 in dem Kopfstück 1 radial geführt ist. In der Zylinderfläche 23 ist eine Ringnut 24 zur Aufnahme eines O-Rings 72 eingebracht. Der O-Ring 72 dichtet die Spindel 2 gegen das Kopfstück 1 ab. Zwischen der Zylinderfläche 23 und dem Außenvielkant 21 ist ein Einstich 25 vorsehen, in den eine Wellensicherung 73 in Form eines Sprengrings federnd eingelegt ist. Die Wellensicherung 73 verhindert das Eindringen der Spindel 2 in das Kopfstück 1 über das vorgesehene Maß hinaus.

Die Spindel 2 ist in dem Kopfstück 1 drehbar. Auf ihrer dem Außenvielkant 21 entgegengerichteten Seite weist die Spindel 2 ein Außengewinde 26 auf. Oberhalb des Außengewindes 26 ist ein Einschraubbund 27 angeformt.

Der Ventilkörper 3 ist in Art eines zylindrischen Stempels ausgeführt. Er ist gebildet durch einen hohlzylindrischen Teil 31, an den sich ein durchmesservergrößertes Ansatzteil 32 anschließt. Das Ansatzteil 32 weist an seinem dem hohlzylindrischen Teil 31 abgewandten Ende umlaufend einen Rand 33 auf, der innen mit einem Radius 34 versehen ist. Im Zentrum des umlaufenden Randes 33 ist eine zylinderförmige Aufnahme 35 angeformt, die mit einer zentrischen Bohrung 36 versehen ist. An seiner dem Ansatz 32 abgewandten Seite sind an dem hohlzylindrischen Teil 31 umlaufend beabstandet zueinander zwei Absätze 37 angeformt, welche der Aufnahme eines O-Rings 75 dienen. An seinem dem Ansatzteil 32 abgewandten Ende ist an dem hohlzylindrischen Teil 31 ein Außensechskant 38 angeformt. Der Außensechskant 38 dient der Verdrehsicherung des Ventilkörpers 3 innerhalb des Kopfstücks 1. Innen ist der hohlzylindrische Teil 31 mit einem Innengewinde 39 versehen.

Die Kegelscheibe 4 ist als Kegelstumpf ausgebildet. Mittig ist in der Kegelscheibe 4 eine Bohrung 41 eingebracht, deren Umfang mit vier Kerben 42 versehen ist. Die Kerben 42 sind jeweils um 90° zueinander versetzt angeordnet. Auf ihrer durchmesserverjüngten Seite ist auf der Kegelscheibe 4 zentrisch ein quadratisch ausgebildeter Absatz 43 angeformt, dessen Kantenlänge im wesentlichen dem Durchmesser der Bohrung 41 entspricht, welche durch den Absatz 43 durchgeführt ist. Der Absatz 43 ist derart auf der Kegelscheibe 4 angeordnet, dass dessen Ecken jeweils mittig zwischen zwei Kerben 42 angeordnet sind. Hierdurch sind in dem Absatz 43 seitliche Ausnehmungen gebildet. Konzentrisch zur Bohrung 41 ist weiterhin eine - nicht dargestellte - kreisförmige Senkung an der durchmesserverjüngten Seite der Kegelscheibe 4 eingebracht, aus der der Absatz 43 erhaben hervorsteht. Der Durchmesser dieser Einsenkung entspricht im Wesentlichen der Länge einer Diagonalen des quadratischen Absatzes 43. Diese Einsenkung dient der Verbesserung der gleichmäßigen Wasserhinterspülung der Kegelscheibe zur Erzielung eines gleichmäßigen Dichtdrucks.

Der Ventilkörper 3 ist derart in das Kopfstück 1 eingebracht, dass der Außensechskant 38 des Ventilkörpers 3 an dem Innensechskant 18 des Kopfstücks 1 anliegt, wodurch der Ventilkörper 3 in dem Kopfstück 1 verdrehsicher gehalten ist. In das Innengewinde 39 des Ventilskörpers 3 ist das Außengewinde 26 der Spindel 3 eingeschraubt, wobei die Spindel 2 über die Wellensicherungen 73, 74 innerhalb des Kopfstücks 1 axial fixiert ist. Eine Drehung der Spindel 2 bewirkt somit eine axiale Bewegung des Ventilkörpers 3 innerhalb des Kopfstücks 1. Diese axiale Bewegung des Ventilkörpers 3 ist begrenzt durch den Anschlag 12 des Kopfstücks 1, an dem in Endstellung der mit dem Gewinde 17 zugewandte obere Absatz 37 des Ventilkörpers 3 anliegt.

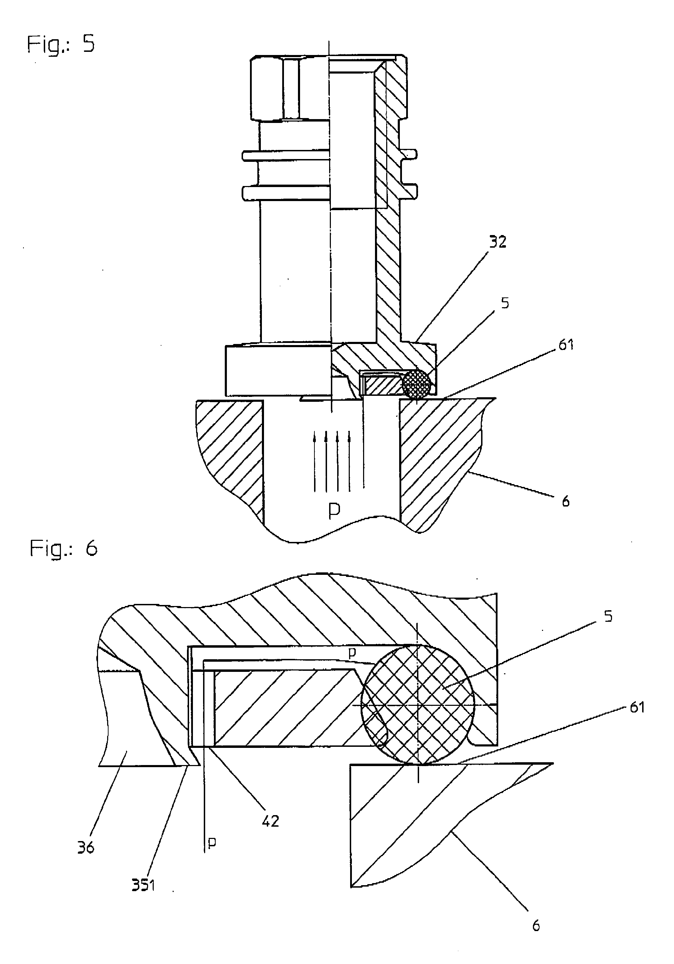

In montiertem Zustand des Ventiloberteils liegt in der entgegengesetzten Endstellung des Ventilkörpers 3 das Ansatzteil 32 am Ventilsitz 61 des Gehäuses 6 an. Die Funktionsweise der Dichtungsanordnung ist in den Figuren 5 und 6 dargestellt, wobei der Wasserdruck P durch Pfeile dargestellt ist. Das Wasser dringt durch die Kerben 42 sowie die durch diese Kerbe 42 bewirkten seitlichen Anordnungen des Absatzes 43 entlang der zylindrischen Aufnahme 35 des Ventilkörpers 3 in den durch den Absatz 43 der Kegelscheibe 4 gewährleisteten Zwischenraum zwischen Ventilkörper 3 und Kegelscheibe 4 ein und drückt von hinten gegen die Kegelscheibe 4 sowie gegen die den Dichtring 5, wodurch eine Unterstützung der Dichtwirkung erzielt ist. In Figur 6 ist deutlich die Bördelkante 351 der Aufnahme 35 des Ventilkörpers 3 ersichtlich, durch welche die Fixierung der Kegelscheibe 4 an dem Ventilkörper 3 bewirkt ist. Weiterhin ersichtlich ist die Abstimmung des O-Rings 5 mit dem Radius 34 des Randes 33 des Ansatzteils 32. Hierdurch ist eine optimale Dichtwirkung in Richtung des Ventilsitzes 61 bewirkt.

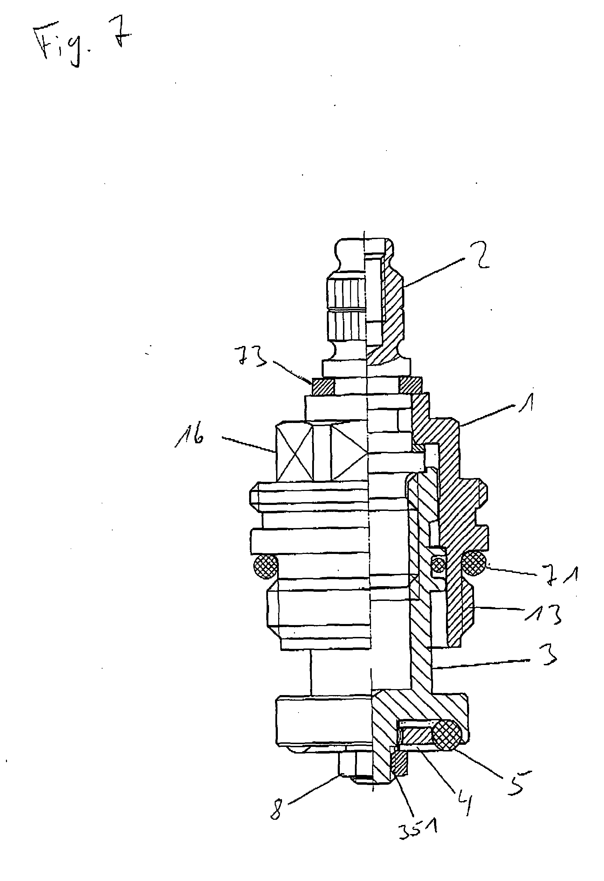

Im Ausführungsbeispiel gemäß Figur 7 ist auf der Kegelscheibe 4 beidseitig zentrisch ein quadratisch ausgebildeter Absatz 43 angeformt, dessen Kantenlänge im Wesentlichen dem Durchmesser der Bohrung 41 entspricht, welche durch den Absatz 43 durchgeführt ist. Die Bohrung 41, deren Umfang mit vier Kerben 42 versehen ist, ist durch die beidseitig der Kegelscheibe 4 angeformten Absätze 43 durchgeführt. Die Kegelscheibe 4 ist auf die zylinderförmige Aufnahme 35 des Ventilkörpers 3 aufgebracht. Die Aufnahme 35 ist mit einem Außengewinde 351 versehen, auf welches eine Mutter 8 zur Befestigung der Kegelscheibe 4 aufgeschraubt ist. Im Gegensatz zur Bördelung gemäß Figur 6 ist durch die Schraubverbindung eine lösbare Verbindung bewirkt, welche einen einfachen Austausch der Kegelscheibe 4 und / oder des Dichtrings 5 ermöglicht. Durch den mutterseitig auf der Kegelscheibe 4 angeformten Absatz 43 ist der zur Unterstützung der Dichtwirkung erforderliche Wasserdurchfluss gewährleistet. Hierzu dienen die durch die Kerben 42 gebildeten seitlichen Ausnehmungen des Absatzes 43, welche durch die Mutter 8 nicht verschlossen werden.

## Patentansprüche

1. Ventiloberteil mit einem Kopfstück, das von einer Spindel mittig durchsetzt ist, über die ein Ventilkörper betätigbar ist, das mit dem Ventilsitz eines Gehäuses zur Anlage kommt, wobei zwischen Ventilkörper und Ventilsitz eine Dichtvorrichtung angeordnet ist, welche einen Dichtring umfasst, der an einer Scheibe anliegt, welche einen Durchbruch aufweist, mit dem sie auf einer im Wesentlichen zylindrisch ausgebildeten Aufnahme des Ventilkörpers angeordnet ist, **dadurch gekennzeichnet, dass** der Durchbruch (41) derart ausgebildet ist, dass zwischen der Aufnahme (35) des Ventilkörpers (3) und der Scheibe (4) wenigstens eine Durchlassöffnung gebildet ist.

2. Ventiloberteil nach Anspruch 1, **dadurch gekennzeichnet, dass** die Scheibe (4) als Kegelstumpf ausgebildet ist.

3. Ventiloberteil nach Anspruch 1 oder 2, **dadurch gekennzeichnet, dass** die Aufnahme (35) des Ventilkörpers (3) eine zentrische Bohrung (36) aufweist und die Scheibe (4) mittels Bördeln der durch die Bohrung (36) gebildeten umlaufenden Kante an dem Ventilkörper (3) befestigt ist.

4. Ventiloberteil nach einem der vorgenannten Ansprüche, **dadurch gekennzeichnet, dass** der Durchbruch (41) durch eine Bohrung gebildet ist, in deren Umfang wenigstens eine Kerbe (42) eingebracht ist.

5. Ventiloberteil nach Anspruch 4, **dadurch gekennzeichnet, dass** vier Kerben (42) jeweils um 90 Grad zueinander versetzt angeordnet sind.

6. Ventiloberteil nach einem der vorgenannten Ansprüche, **dadurch gekennzeichnet, dass** an der Scheibe (4) an ihrer dem Kopfstück (1) zugewandten Seite ein Abstandhalter angeformt ist.

7. Ventiloberteil nach einem der vorgenannten Ansprüche, **dadurch gekennzeichnet, dass** an der Scheibe (4) an ihrer dem Kopfstück (1) abgewandten Seite ein Abstandhalter angeformt ist.

8. Ventiloberteil nach Anspruch 7, **dadurch gekennzeichnet, dass** die Aufnahme (35) des Ventilkörpers (3) ein Außengewinde (351) aufweist und die Scheibe (4) mittels einer Mutter (8) an dem Ventilkörper (3) befestigt ist.

9. Ventiloberteil nach einem der Ansprüche 6 bis 8, **dadurch gekennzeichnet, dass** der Abstandhalter als Absatz (43) ausgebildet ist, der den Durchbruch (41) umgibt.

10. Ventiloberteil nach Anspruch 9, **dadurch gekennzeichnet, dass** der Absatz (43) quadratisch ausgebildet ist, wobei die Kantenlänge des Quadrats im Wesentlichen dem Durchmesser der Aufnahme (35) des Ventilkörpers (3) entspricht.

11. Ventiloberteil nach Anspruch 10 **dadurch gekennzeichnet, dass** der Absatz (43) derart angeordnet ist, dass dessen Ecken neben der wenigstens einen Durchlassöffnung angeordnet sind.
